(19) Europäisches Patentamt
European Patent Office
Office européen des brevets

(11) Veröffentlichungsnummer: **0 005 829**
**B1**

(12) # EUROPÄISCHE PATENTSCHRIFT

(45) Veröffentlichungstag der Patentschrift: **26.08.81**

(51) Int. Cl.³: **C 09 G 1/04**, C 11 D 3/48, A 01 N 33/04

(21) Anmeldenummer: **79101655.3**

(22) Anmeldetag: **30.05.79**

(54) **Verfahren zur Herstellung von Desinfektionsmittel enthaltenden, wässrigen Putzmittelemulsionen und deren Verwendung.**

(30) Priorität: **06.06.78 DE 2824716**

(43) Veröffentlichungstag der Anmeldung: **12.12.79 Patentblatt 79/25**

(45) Bekanntmachung des Hinweises auf die Patenterteilung: **26.08.81 Patentblatt 81/34**

(84) Benannte Vertragsstaaten: **BE DE FR GB IT NL**

(56) Entgegenhaltungen:
**DE-A-2 023 204**
**FR-A-2 333 841**

(73) Patentinhaber: **HOECHST AKTIENGESELLSCHAFT, Zentrale Patentabteilung Postfach 80 03 20, D-6230 Frankfurt/Main 80 (DE)**

(72) Erfinder: **Gänswürger, Lorenz, Buchenstrasse 5, D-8904 Friedberg (DE)**
Erfinder: **Strehle, Josef, Talweg 11 1/2, D-8900 Augsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Desinfektionsmittel enthaltenden, wässrigen Putzmittelemulsionen und deren Verwendung

Langkettige Fettamine, vorzugsweise ihre Salze und insbesondere ihre quartären Ammoniumsalze sind sehr wirksame keimwidrige Mittel. Je nach Konzentration und dem verwendeten Salz wirken sie auf Mikroorganismen abtötend oder wachstumshemmend. Sie besitzen ein breites Wirkungsspektrum gegenüber Bakterien, Pilzen und Algen der verschiedensten Art, sind für höhere Organismen unschädlich und werden daher z. B. als Desinfektionsmittel in der Chirurgie, in der Kosmetik, als Algenvernichter in Schwimmbecken und als Verhinderer von Schimmelpilz- und Fäulnisbefall in Gewächshäusern eingesetzt.

Es erschien naheliegend, diese vorteilhaften Eigenschaften der kationaktiven Substanzen mit den pflegenden und verschönenden Eigenschaften von Wachsen zu kombinieren. Wie für eine Vielzahl anderer Anwendungsgebiete sind hierfür Wachse in feindispergierter Form mit äusserer Phase Wasser vorzuziehen, da sie in dieser Form nicht brennbar, leicht auftragbar und mühelos verteilbar sind. Derartige Produkte bieten sich besonders für die rationelle Reinigung und Pflege der Fussböden in einem Arbeitsgang an.

Nun ist es jedoch bekannt, dass wässrige Lösungen der genannten kationaktiven Desinfektionsmittel und wässrige anionaktive Wachsemulsionen aufgrund ihrer unterschiedlichen chemischen Struktur miteinander unverträglich sind. Je nach Konzentration und Abmischungsverhältnis kommt es zu desinfektorisch wertlosen, griessligen Niederschlägen, Viskositätsanstieg oder spontanen Geliereffekten durch die Bildung von wenig wasserlöslichen Elektroneutralsalzen nach der Reaktionsgleichung

$$\begin{bmatrix} H \\ R\text{–}N\text{–}H \\ H \end{bmatrix}^{+} Cl^{-} + R'\text{–}COO^{-}K^{+} \rightarrow \begin{bmatrix} H \\ R\text{–}N\text{–}H \\ H \end{bmatrix}^{+} R'COO^{-} + KCl$$

kation. Aminsalz    anion. Wachsseife    Elektroneutralsalz

Es wurde nun gefunden, dass man lagerstabile Abmischungen aus den wässrigen kationischen Fettaminverbindungen und anionischen Wachsemulsionen überraschenderweise dann erhalten kann, wenn einer der beiden Komponenten vor dem Zusammenmischen nichtionogene grenzflächenaktive Substanzen zugesetzt werden.

Die vorliegende Erfindung betrifft daher ein Verfahren zur Herstellung von wässrigen Wachsemulsionen mit einem Gehalt an einer kationischen bioziden Wirksubstanz, die ein Salz oder ein Quaternisierungsprodukt eines langkettigen Fettamins ist, welches dadurch gekennzeichnet ist, dass man getrennt voneinander eine anionisch emulgierte Wachsemulsion mit 5 bis 40 Gew.-% Wachsanteil und eine wässrige Lösung der bioziden Wirksubstanz herstellt, einer oder beiden Lösungen ein Oxethylierungsprodukt, das aus einem Fettalkohol mit 8 bis 34 C-Atomen und/ oder einem Alkylphenol mit 8 bis 22 C-Atomen durch Umsetzen mit 6 bis 50 Mol Ethylenoxid erhalten worden war, zusetzt und hierauf die Wachsemulsion mit der Wirksubstanzlösung vermischt, wobei die Mengen so zu wählen sind, dass in 100 Gewichtsteilen Fertigprodukt 1 bis 20 Gewichtsteile Wachs, 1 bis 10 Gewichtsteile biozide Wirksubstanz und 1 bis 10 Gewichtsteile Oxethylierungsprodukt enthalten sind.

In den erfindungsgemäss hergestellten Pflegemittelemulsionen ist die biozide Wirksamkeit der kationischen Substanzen, beispielsweise gegen Staphylococcus aureus, Klebsiella pneumoniae, Escherichia coli und Pseudomonas aeroginosa, durch die Anwesenheit der Wachsemulsion und der nichtionischen Tenside nicht beeinträchtigt. Die Stabilität der Emulsionen ist hervorragend, und es kommt selbst bei einer Lagerung im Bereich höherer Temperaturen über längere Zeiten zu keinen Entmischungen oder Zusammenballungen, was nicht vorhersehbar war.

Für die Herstellung der wässrigen Wachsemulsionen kommen Carboxylgruppen enthaltende natürliche, teilsynthetische oder synthetische Wachse in Frage. Im einzelnen seien genannt: Polyäthylenwachsoxidate mit Molgewichten zwischen etwa 2000 und 10 000 mit Säurezahlen zwischen 7 und 70, insbesondere 15 bis 50. Wachse, wie sie durch Oxidation von geradkettigen Paraffinen, mikrokristallinen Wachsen oder Fischer-Tropsch-Wachsen gewinnbar sind, mit Säurezahlen zwischen etwa 5 und 40, sowie die bei der oxidativen Bleichung von entharztem oder nicht entharztem Rohmontanwachs, beispielsweise mittels Chromsäure, anfallenden Wachse mit Säurezahlen zwischen etwa 5 und 80. Geeignet sind ferner Teilveresterungsprodukte derartiger Wachse, die in bekannter Weise durch Umsetzen der Oxidate mit ein- oder mehrwertigen Alkoholen erhältlich sind und Säure- und Verseifungszahlen im Bereich 5 bis 80 bzw. 60 bis 160 aufweisen. Beispiele sind Esterwachse auf Rohmontanwachsbasis und teilveresterte Polyäthylenoxidate. Bei den in der Natur direkt vorkommenden Wachsen wie Carnauba- und Candelillawachs liegt die Säurezahl im genannten Bereich, sie können daher ohne chemische Veränderung eingesetzt werden.

Die Wachse werden in die in Wasser dispergierbare Form übergeführt durch Reagierenlassen der Carboxylgruppen mit Alkalilaugen oder

primären, sekundären oder tertiären Aminen oder auch Aminalkoholen mit Siedepunkten zwischen etwa 110 und 180 °C, wie Diethylaminoethanol, 2-Amino-2-methyl-1-propanol oder Morpholin. Man erhält die Verseifungsprodukte durch Zusammenbringen der geschmolzenen Wachse mit den Laugen bzw. Aminen. Zur Emulgierung von carboxylgruppenarmen Wachsen kann der Zusatz von Fettsäuren, wie Öl-, Stearin- und Palmitinsäure, erforderlich sein. Es entstehen somit anionaktive Wachsemulsionen. Der Wachsgehalt derartiger Emulsionen wird auf 5 bis 40, vorzugsweise etwa 15 Gew.-% eingestellt.

Unter kationischen bioziden Wirksubstanzen werden die Salze langkettiger Fettamine sowie insbesondere ihre Quaternisierungsprodukte verstanden. Genannt seien beispielsweise Didecyl-dimethylammoniumchlorid, Sojatrimethylammoniumchlorid, Kokosfettamin-dimethylbenzyl-ammoniumchlorid und Kokosfettaminacetat. Ausgangsstoffe für diese Amine sowie die genannten Folgeprodukte sind Fettsäuren, meistens in Form von Gemischen von Verbindungen verschiedener Kettenlänge, wie sie in der Natur anfallen. Demzufolge liegen in den Fettaminen und Fettamin-Folgeprodukten vorwiegend Gemische von Aminen verschiedener Kettenlänge vor, die wie die Fettsäuren teilweise ungesättigt sind. Chemisch gesehen handelt es sich um geradkettige, aliphatische, primäre Amine mit 8 bis 22 Kohlenstoffatomen, Fettamine sind zwar als desinfektorisch wirksam bekannt, werden jedoch wegen ihrer geringen Löslichkeit in Wasser im vorliegenden Fall nicht eingesetzt. Man verwendet daher vorwiegend die aus ihnen herstellbaren Fettaminsalze. Durch die Salzbildung entstehen wasserlösliche Fettammonium-Ionen. Besonders leicht wasserlöslich sind organische Salze, die durch Neutralisation eines Fettamins mit Essigsäure, Benzoesäure, Benzolsulfonsäure oder anderen organischen Säuren leicht zugänglich sind. Zur Gewinnung quartärer Ammoniumsalze bedient man sich im allgemeinen des Verfahrens der Peralkylierung der Fettamine mit kurzkettigen Alkylhalogeniden oder Dialkylsulfaten. Die als quartäre Desinfektionsmittel bewährten Fettalkyl-dimethylbenzylammoniumchloride werden aus tertiären Fettaminen und Benzylchlorid hergestellt.

Die kationischen bioziden Wirksubstanzen kommen erfindungsgemäss in Form von wässrigen Lösungen zum Einsatz. Die käuflichen Produkte enthalten im allgemeinen 20 bis 60 Gew.-% Wirkstoff.

Nach der erfindungsgemässen Arbeitsweise wird der Wachsemulsion bzw. dem zu emulgierenden Wachs oder auch der bioziden Wirkstofflösung oder auch beiden Komponenten eine nichtionogene, grenzflächenaktive Substanz in einer solchen Menge zugesetzt, dass in 100 Gewichtsteilen des aus Wachsemulsion und Wirkstofflösung bestehenden Endproduktes 1 bis 10 Gewichtsteile derselben anwesend sind. Geeignete nichtionogene, grenzflächenaktive Substanzen sind Oxethylierungsprodukte von Fettalkoholen mit 8 bis 34 Kohlenstoffatomen oder von Alkylphenolen mit 8 bis 22 C-Atomen im Grundmolekül, an die 6 bis 50 Mol Ethylenoxid pro Mol Fettalkohol bzw. Phenol gebunden sind.

Die nichtionogene, grenzflächenaktive Substanz kann auch als Co-Emulgator bei der Herstellung der anionischen Wachsemulsion verwendet werden, und es ist natürlich ebenfalls möglich, von einem Wachs auszugehen, welches die grenzflächenaktive Verbindung bereits enthält. In diesen Fällen kommt man bei der Herstellung der Wachsemulsion mit besonders geringen Mengen an anionischen Emulgatoren aus.

Die erfindungsgemäss hergestellten bioziden Pflegemittelemulsionen besitzen sehr gute Netz- und Verlaufseigenschaften sowie eine gute Reinigungswirkung. Zur Verstärkung der bioziden Wirksamkeit können zusätzlich elektrisch neutrale keimtötende Mittel, wie Formaldehydlösung, Glyoxal und Glutardialdehyd eingearbeitet werden, die in manchen Fällen einen synergistischen Effekt bewirken. Es ist ferner möglich, den Pflegemittelemulsionen zur Erzielung härterer Pflegemittelfilme in bekannter Weise Kunststoffdispersionen, wie z. B. Styrol-Acrylat-Copolymerdispersionen, zuzusetzen.

Die Pflegemittelemulsionen gemäss der Erfindung werden in der Praxis im allgemeinen mit Wasser verdünnt appliziert. Je nach Anforderungen liegt das Verhältnis Emulsion:Wasser bei 1:10 bis 1:100.

Die nachstehenden Beispiele dienen der näheren Erläuterung der Erfindung. Die angegebenen Teile sind stets Gewichtsteile.

Beispiel 1

Es wird eine Wachsemulsion hergestellt, indem man in 82,2 Teile siedendes Wasser eine 125° C heisse Schmelze aus 15,0 Teilen eines Polyethylenwachsoxidats vom Molgewicht ca. 3000 und der Säurezahl 40, 1,0 Teilen Ölsäure und 1,8 Teilen Diethylaminoethanol einrührt, worauf schnell auf Raumtemperatur abgekühlt wird. Man erhält 100 Teile Wachsemulsion mit 15 Gew.-% Wachsanteil.

40,0 Teile dieser anionischen Polyethylenwachsemulsion werden mit 50,0 Teilen entsalztem Wasser verdünnt, anschliessend werden 4,0 Teile Nonylphenolpolyglykolether mit 15 Mol Ethylenoxid eingerührt. Es werden sodann 6,0 Teile einer handelsüblichen wässrigen Lösung einer quartären Ammoniumverbindung zugegeben, die aus ca. 50% Didecyl-Dimethylammoniumchlorid, ca. 20% Isopropanol und ca. 30% Wasser besteht. Man erhält 100 Teile Fertigprodukt von feindisperser Beschaffenheit, welches eine gute Lagerstabilität besitzt.

Vergleichsbeispiel

Man arbeitet wie vorstehend beschrieben, jedoch ohne den Zusatz des Nonylphenolpolyglykolethers. In diesem Fall kommt es bereits beim Zusammengiessen der kationischen Lösung mit der anionischen Wachsemulsion zu einer Ausfällung.

Beispiel 2

Die Wachsemulsion besteht aus 15,0 Teilen Polyethylenwachsoxidat vom Molgewicht ca. 3000 und der SZ 40, wie bei Beispiel 1, 4,0 Teilen Nonylphenolpolyglykolether mit 15 Mol Ethylenoxid, 0,6 Teilen Diethylaminoethanol und 80,4 Teilen Wasser. Man erhält 100,0 Teile Wachsemulsion mit 15% Wachsanteil.

50,0 Teile der vorstehenden Polyethylenwachsemulsion werden mit 44,0 Teilen Wasser verdünnt. Anschliessend werden 6,0 Teile der in Beispiel 1 verwendeten Didecylammoniumchloridlösung eingerührt.

Durch die Verwendung des Oxethylierungsproduktes als Co-Emulgator wird ohne weiteren Zusatz ein feindisperses, lagerstabiles Endprodukt erhalten. Wachsemulsion und Disinfektionsmittel lassen sich nach dieser Verfahrensweise im gegensatz zu Beispiel 1 direkt miteinander mischen.

Beispiel 3

Die Wachsemulsion besteht aus 15,0 Teilen eines oxidativ mit Chromsäure auf SZ ca. 120 gebleichten und mit Ethylenglykol auf SZ 30 veresterten Montanwachsderivates, 4,0 Teilen Stearylalkoholpolyglykolether mit 20 Mol Ethylenoxid, 0,2 Teilen Kalilauge, ca. 43%ig, 0,4 Teilen Diethylaminoethanol und 80,4 Teilen Wasser.

50,0 Teile der vorstehenden Montanwachsemulsion werden mit 42,0 Teilen Wasser verdünnt. Anschliessend werden 8,0 Teile eines handelsüblichen Desinfektionsmittelgemisches, das aus ca. 25% Sojamethylammoniumchlorid, dessen langer Kohlenwasserstoffrest überwiegend ein $C_{18}$-Olefin ist, ca. 25% Laurylpropylendiaminguanidiniummonolaktat, ca. 30% Isopropanol und ca. 20% Wasser besteht, zugesetzt. Man erhält 100,0 Teile feindisperses, lagerstabiles Fertigprodukt.

Beispiel 4

Man stellt ein Wachsemulsionskonzentrat her, das aus 27,6 Teilen Polyethylenwachsoxidat vom Molgewicht ca. 5000 und der SZ 25, 6,9 Teilen Isotridecylalkoholpolyglykolether mit 8 Mol Ethylenoxid, 0,2 Teilen Kaliumhydroxid, ca. 86%ig, 0,5 Teilen 2-Amino-2-methyl-1-propanol und 64,8 Teilen Wasser besteht, welches einen Wachsanteil von 27,6 Gew.-% besitzt.

17,0 Teile dieses Emulsionskonzentrats werden mit 67,0 Teilen Wasser verdünnt, worauf man 4,0 Teile Tributylphenolpolyglykolether mit 18 Mol Ethylenoxid einrührt. Zu der erhaltenen Emulsion gibt man 12,0 Teile einer handelsüblichen quartären Ammoniumverbindung, die aus 50% Alkyldimethylbenzylammoniumchlorid, dessen langer Alkylrest die geradzahligen Glieder mit 8 bis 18 C-Atomen umfasst (in der Verteilung der Kettenlänge der Kokosfettsäure mit etwa 50% $C_{12}$-Anteil) und 50% Wasser besteht, zu.

Beispiel 5

Es wird eine Wachsemulsion hergestellt aus 15,0 Teilen Polyethylenwachs-Oxidat vom Molgewicht ca. 2000 und der SZ 18, 3,0 Teilen Kokosfettalkoholpolyglykolether mit 8 Mol Ethylenoxid, dessen hydrophober Anteil einem gesättigten $C_8$- bis $C_{18}$-Fettalkohol, vorwiegend $C_{12}$ bis $C_{14}$, entspricht, 0,5 Teilen Kalilauge, ca. 43%ig, und 81,5 Teilen Wasser.

30,0 Teile dieser Emulsion werden mit 62,0 Teilen Wasser verdünnt, worauf man 3,0 Teile eines Tributylphenolpolyglykolethers mit 30 Mol Ethylenoxid einrührt. Es werden sodann 5,0 Teile handelsübliches Kokosfettaminacetat mit $[C_{12}H_{25}-NH_3]^+CH_2-COO^-$ als Hauptkomponente zugesetzt.

Beispiel 6

Zur Ermittlung der Stabilität wurden die nach Beispiel 1 bis 5 hergestellten Emulsionen über längere Zeit bei unterschiedlichen Temperaturen gelagert. In der nachstehenden Tabelle sind die Ergebnisse zusammengestellt.

| Beispiel | Stabilität bei Raumtemperatur | Stabilität bei 50 °C |
|---|---|---|
| 1 | nach 5 Monaten dickflüssig geworden | nach 3 Wochen dickflüssig geworden |
| 2 | nach 6 Monaten noch einwandfrei | nach 4 Wochen noch einwandfrei |
| 3 | nach 6 Monaten noch einwandfrei | nach 4 Wochen noch einwandfrei |
| 4 | nach 6 Monaten noch einwandfrei | nach 4 Wochen noch einwandfrei |
| 5 | nach 6 Monaten noch einwandfrei | nach 4 Wochen noch einwandfrei |

**Patentansprüche**

1. Verfahren zur Herstellung von wässrigen Wachsemulsionen mit einem Gehalt an einer kationischen bioziden Wirksubstanz, die ein Salz oder ein Quaternisierungsprodukt eines langkettigen Fettamins ist, dadurch gekennzeichnet, dass man getrennt voneinander eine anionisch emulgierte Wachsemulsion mit 5 bis 40 Gew.-% Wachsanteil und eine wässrige Lösung der bioziden Wirksubstanz herstellt, einer oder beiden Lösungen ein Oxethylierungsprodukt, das aus einem Fettalkohol mit 8 bis 34 C-Atomen und/oder einem Alkylphenol mit 8 bis 22 C-Atomen durch

Umsetzen mit 6 bis 50 Mol Ethylenoxid erhalten worden war, zusetzt und hierauf die Wachsemulsion mit der Wirksubstanzlösung vermischt, wobei die Mengen so zu wählen sind, dass in 100 Gewichtsteilen Fertigprodukt 1 bis 20 Gewichtsteile Wachs, 1 bis 10 Gewichtsteile biozide Wirksubstanz und 1 bis 10 Gewichtsteile Oxethylierungsprodukt enthalten sind.

2. Verfahren nach Anspruch 1, dadurch gekennzeichnet, dass die Herstellung der anionischen Wachsemulsion bereits in Gegenwart des Oxethylierungsproduktes oder einer Teilmenge desselben vorgenommen wird.

3. Verfahren nach Anspruch 1 oder 2, dadurch gekennzeichnet, dass die Wachsemulsionen durch Emulgierung von Polyethylenwachsoxidaten vom Molgewicht 2000 bis 10 000 und der Säurezahl 7 bis 70, von natürlichen, synthetischen oder teilsynthetischen Esterwachsen der Säurezahl 5 bis 80 und der Verseifungszahl 60 bis 160 und von Paraffinoxidaten der Säurezahl 10 bis 40 erhalten werden.

4. Verwendung der nach Anspruch 1 oder 2 erhaltenen Wachsemulsionen zur Fussbodenpflege, gegebenenfalls nach Abmischen mit weiteren in Pflegemitteln üblichen Zusätzen.

**Claims**

1. Process for the manufacture of aqueous wax emulsions having a content of a salt or a quaternization product of a long chain fatty amine as cationic, biocidally effective substance, which comprises preparing separately an anionically emulsified wax emulsion with a wax proportion of from 5 to 40% by weight and an aqueous solution of the biocidally active compound, adding to one or both components an oxethylation product prepared by reacting a fatty alcohol having from 8 to 34 carbon atoms and/or an alkyl phenol having from 8 to 22 carbon atoms with 6 to 50 mols of ethylene oxide, and then mixing the wax emulsion with the solution of the active substance in a proportion such that 100 parts by weight of the finished product contain 1 to 20 parts by weight of wax, 1 to 10 parts by weight of biocidally active substance and 1 to 10 parts by weight of oxethylation product.

2. The process claimed in claim 1, wherein the anionic wax emulsion is produced in the presence of the total or a partial amount of the oxethylation product.

3. The process claimed in claim 1 or 2, wherein the wax emulsion is produced by emulsification of a polyethylene wax oxidate having a molecular weight in the range of from 2,000 to 10,000 and an acid number of from 7 to 70, of a natural, synthetic or partially synthetic ester wax having an acid number of from 5 to 80 and a saponification number of from 10 to 40.

4. Use of the wax emulsions obtained as claimed in claims 1 or 2 for the care of floors, optionally in admixture with further additives usual in polishing emulsions.

**Revendications**

1. Procédé de préparation d'émulsions aqueuses de cires renfermant une substance biocide cationique qui est un sel ou un produit de quaternisation d'une amine grasse à longue chaîne, procédé caractérisé en ce qu'on prépare séparément l'une de l'autre une émulsion de cire anioniquement émulsionnée dont la teneur en cire est comprise entre 5 et 40% en poids et une solution aqueuse de la substance biocide, on ajoute à l'une des deux solutions ou aux deux un produit d'éthoxylation qui a été obtenu à partir d'un alcool gras contenant de 8 à 34 atomes de carbone et/ou d'un alkylphénol contenant de 8 à 22 atomes de carbone par réaction avec 6 à 50 moles d'oxyde d'éthylène, et ensuite on mélange l'émulsion de cire avec la solution de la substance active, les quantités étant choisies de telle façon qu'il y ait, dans 100 parties en poids du produit fini, de 1 à 20 parties en poids de cire, de 1 à 10 parties en poids de la substance biocide et de 1 à 10 parties en poids du produit d'éthoxylation.

2. Procédé selon la revendication 1, caractérisé en ce que la préparation de l'émulsion de cire anionique est effectuée déjà en présence du produit d'éthoxylation ou d'une partie de celui-ci.

3. Procédé selon l'une des revendications 1 et 2, caractérisé en ce que, pour obtenir les émulsions de cires, on émulsionne des produits d'oxydation de cires de polyéthylène ayant un poids moléculaire de 2000 à 10 000 et un indice d'acide de 7 à 70, des cires d'esters naturelles, synthétiques ou partiellement synthétiques ayant un indice d'acide de 5 à 80 et un indice de saponification de 60 à 160, et des produits d'oxydation de paraffines ayant un indice d'acide de 10 à 40.

4. Utilisation des émulsions de cires qui ont été obtenues selon l'une des revendications 1 et 2 pour l'entretien des sols, éventuellement après qu'elles ont été mélangées avec d'autres additifs couramment utilisés dans les produits d'entretien.